# EUROPEAN PATENT SPECIFICATION

(11) **EP 1 432 881 B1**
(45) Date of publication and mention of the grant of the patent: **16.07.2008**
(21) Application number: 02798028.3
(22) Date of filing: 12.09.2002
(51) Int. Cl.: E04C 3/28, E04C 2/54, B32B 17/10

(54) **STRUCTURAL ELEMENT, IN PARTICULAR FOR THE BUILDING INDUSTRY**
KONSTRUKTIONSELEMENT, INSBESONDERE FÜR DIE BAUINDUSTRIE
ELEMENT STRUCTUREL UTILISE EN PARTICULIER DANS L'INDUSTRIE DU BATIMENT

(30) Priority: 12.09.2001 IT BS20010068
(43) Date of publication of application: 30.06.2004
(73) Proprietor: Palumbo, Michel, 25045 Castegnato (IT)
(72) Inventor: Palumbo, Michel, 25045 Castegnato (IT)
(74) Representative: Gallo, Luca
(86) International application number: PCT/IT2002/000581
(87) International publication number: WO 2003/023162

(56) References cited:
- EP-A- 0 750 079
- DE-A- 2 906 259
- DE-C- 897 755
- DE-U- 29 521 460
- FR-A- 2 171 929
- FR-A- 2 676 049
- US-A- 5 040 352
- US-A- 5 219 630
- US-A- 5 794 403

## Description

### Technical field

The present invention relates to a structural element, in particular for the building industry, made of transparent material and intended for the construction, for example, of a pillar, a beam, a lintel, an arch or similar elements all offering a notable degree of safety.

In particular, the present invention relates to structural elements, including large-size elements, made mainly of glass.

The structural element in question is therefore suitable for use in the civil engineering sector for the construction of load-bearing structures and large-size transparent surfaces.

### Background art

Glass material, although it is known per se and has been used for a long time, has nevertheless been available on the market at a low cost in the form of large high-quality sheets with optimum optical properties only relatively recently owing to the introduction of the float process at the start of the 1960s.

As is known, in conventional architecture, the glazed surfaces normally occupy a limited area and the individual panes are inserted in frames which are in turn fixed to a load-bearing wall.

Recently, owing to technological progress, it has been possible to provide large-size glazed surfaces. The latter in this case also are obtained with sheets which need to be positioned and supported by means of structural elements intended to support the loads.

In accordance with the currently known technology, therefore, the individual sheets which form the glass parts of buildings are positioned and supported by structural elements, such as pillars, beams, trusses, ties and struts which are intended to absorb and oppose practically all the loads and are mostly made from traditional materials such as metal, brick or stone, wood or reinforced concrete.

On the other hand, it is obvious that the construction also of the structural elements from transparent material would increase the effect in terms of luminosity and spaciousness.

In particular, this effect can be heightened in the case of large covering surfaces, the manufacture of which requires large-size structural elements able to withstand bending stresses.

At present, in accordance with the technology known hitherto, the manufacture of these structural elements from glass poses several problems.

These problems are mainly due to the fact that the glass has an excellent resistance to compressive stress, but a limited resistance to tensile stress.

Table 1 shows the typical values of these properties:

**Table 1**

| | |
|---|---|
| Tensile strength | 20-100 N/mm² |
| Compressive strength | 400-900 N/mm² |
| Modulus of elasticity | 70,000 to 74,000 N/mm² |

Glass is an element which has a high hardness factor, but is very fragile. Since it is fragile, a pulsed stress produces a fracture or crack with the consequent separation of parts and risk of the structure collapsing.

Moreover, the formation of a crack, even small in size (microscopic crack) results in the formation of concentrated local stresses which may be very considerable in size, even where the glass is subject to medium-range stresses which are entirely compatible with its strength. This phenomenon is particularly evident in the region of those glass parts which are subject to tensile stresses.

As is well-known, microscopic cracks are typically inevitably caused by operations involving cutting of the glass into sheets. The cut edge, even if it is smoothed afterwards, has in fact a leading edge with microscopic cracks in which the stresses - while widely admissible if uniformly distributed as in the case of tougher materials - are concentrated at the apex of the cracks and may suddenly reach values higher than the strength of the material, therefore causing fracturing thereof.

The fracture progresses in two successive stages: during a first stage, which is referred to as "subcritical propagation" stage, there is a slow propagation of the crack to a size which is called "critical size" dependent upon the material and the stress, upon reaching of which catastrophic fracturing starts; and during a second stage, which is referred to as "catastrophic propagation" stage, the fracture spreads with a speed of propagation equivalent to a few metres per second.

From scientific literature it is also known how the environmental humidity greatly favours the subcritical propagation of the fracture.

In accordance with that which is widely taught in Fracture Mechanics, if the stress intensification factor is defined as: K_{I} = σY√πa, with Y being the form factor, a the size of the defect and σ the mean stress acting on the sheet-like element, the critical size of the crack is equivalent to: ac=1/n(K_{IC}/Yσ)². Still in accordance with the teachings of Fracture Mechanics it is known that if K_{I} < K_{Ith} there is no propagation of the fracture, if K_{Ith} < K_{I} < K_{IC} the phenomenon of subcritical propagation of the defect occurs and if K_{I} = K_{Ic} there is propagation of the crack. K_{IC} is defined as the critical stress intensification factor, is a property of the material and in the case of soda-lime glass is equal to about 0.75 MPa√m ; K_{Ith} is defined as the stress intensification factor, i.e. the threshold below which there is no subcritical propagation of the defect, is a property of the material and in the case soda-lime glass is equal to about 0.2 MPa√m.

The currently known manufacturing technology applied to glass elements takes into account the possibility of formation of these microscopic cracks and bases the dimensions of the said elements thereon, irrespective as to whether or not they perform structural functions, envisaging a suitable safety coefficient, on a scale up to 10, aimed at ensuring the presence of loads in the structure of the glass which are sufficiently small to avoid entering the subcritical propagation range of the flaws.

Document DE 29 06 259 discloses a wallboard of high rigidity consisting of two cover elements of transparent plastic and an intermediate filing arranged between the cover elements of a transparent foam material.

Document DE 897 755 discloses a beam of glass consisting of a large central plate fixed at the ends to two peripheral plates and having some reinforcing plates adhering to the end portions of the central plate to reinforce the beam and forming a double T shape beam.

This design approach, although undoubtedly effective in the case of self-supporting or non load-bearing glass, undoubtedly has safety shortcomings in the case where the glass element is intended to perform a structural function so as to withstand loads which are static or cyclical over time.

For the sake of clarity, the meanings specified hereinbelow shall be understood as being applicable in the remainder of the description:
- the expression "fragile material" is understood as meaning a material which, when subjected to an increasing compressive or tensile stress, does not have a plastic, but only an elastic behaviour range followed by breakage:

- the expression "tough material" is understood as meaning a material which, when subjected to an increasing compressive or tensile stress, has a plastic behaviour range before breakage;
- the term "multilayer element" is understood as meaning an element consisting of a plurality of sheet-like elements arranged in parallel, alongside each other, with or without the arrangement in between them of other materials such as adhesives and/or heat-resistant agents.

It is known to use multilayer glass for the formation of load-bearing structural elements.

For example, flat-glass surfaces, in which a transparent adhesive polymer, generally polyvinyl butyral, is arranged between the sheet-like elements, are governed by the Safety Standards UNI 7172.

The multilayer element thus obtained has, as is known, optimum properties in respect of resistance to shattering and breakage caused by impacts, but does not solve the abovementioned drawbacks which arise for each individual sheet-like element which forms the multilayer element.

The technique of toughening the multilayer element by means of the arrangement, in between, of a sheet-like element of tough transparent plastic material, generally polycarbonate, is also known. The toughening internal layer adheres to the glazed surfaces, joining them integrally together. In the case of an incipient fracture in the glass supporting the polycarbonate - this latter material, as is known, being tough - the multilayer element still retains sufficient mechanical properties to provide a residual resistance, preventing sudden collapse of the multilayer structure itself.

The construction of structural elements such as beams and pillars according to this known art is described in the following texts: "Applicazione strutturale del vetro multistrato" [Structural application of multilayer glass], XIII National Congress of the Italian Institute for Fracture Studies, Cassino, 27-28 May 1997, pages 212-221; authors M. Palumbo, G. Plizzari and E. Tempesti; "Effetto della presenza di micro-difetti e della temperatura sul comportamento strutturale del vetro multistrato" [Effect of the presence of microscopic defects and heat on the structural behaviour of mutlilayer glass], XIV National Congress of the Italian Institute for Fracture Studies, Trento 27-28 May 1998, pages 145-152, authors M. Palumbo, G. Plizzari, V. Sglavo and E. Tempesti and "Nuovi materiali polimerici per Vetri Multistrato Tenacizzati" [New polymer materials for Toughened Multilayer Glass] 5th National Congress ATMAT, Spoleto - Perugia 17-21 July 2000, pages 919-923, authors M. Palumbo, C. Garzella, L. Pensieri, P. Rosati G. Plizzari, T. Riccò and E. Tempesti.

The use of polycarbonate or similar polymers is undoubtedly an additional safety element which, however, does not limit in any way the progression of the defects in the sheets of glass.

In fact, the toughening action of the polycarbonate intervenes solely when all the sheets are damaged, and therefore the function of the polycarbonate layer is only that of ensuring an adequate degree of safety so that the multilayer structure does not collapse suddenly, allowing it to continue withstanding a load.

The American Patents USA 4190698 and USA 5565273 describe a method for manufacturing elements with fire and high-temperature resistance properties, consisting of a plurality of glass sheets having arranged in between them an intumescent compound based on hydrated alkaline polysilicates with a molar ratio SiO₂/Me₂O greater than 3. In the event of fire or high temperatures, the hydrated alkaline polysilicate forms a foam which retains the fragments of glass and which, incorporating a considerable quantity of gas, has a high resistance to heat transmission through conduction or irradiation.

Drawbacks of these known methods for the manufacture of structural elements are the complexity of the preparative operations which involve cutting of thick multilayer sheet-like elements, the considerable weight and cost, the need to adopt a fairly high safety coefficient in order to prevent or avoid the incipience of microscopic cracks which tend to increase at fairly high speeds, adversely affecting the static stability of the structure.

Moreover, when using the abovementioned multilayer elements, the overall strength of the entire structure is obtained by simply adding together the respective strengths of the individual layers. In particular, the flexural rigidity, which is defined as the product of the value of the elastic modulus multiplied by the value of the moment of inertia of the area of the structure in the bending plane, is obtained by adding together the flexural rigidity values of the individual sheet-like layers.

The glass multilayer structure solutions described briefly hitherto are intended mainly for the construction of self-supporting or non load-bearing glass walls and not for the construction of structural elements intended to support loads.

In order to improve the moment of inertia of the cross-section, the text "Atlante del Vetro" [The Glass Atlas], UTET 1998, in Chapter 2 by Werner Sobek and Mathias Kutterrer, describes the construction of hollow box-like cross-sections using a greater quantity of material in the zone which is subject to tensile stress.

Chapter 2 of the same text "Atlante del Vetro" [The Glass Atlas], UTET 1998, also contains a study on the construction of multilayer reinforced-glass beams by means of the combination with separate elements made of another material.

As mentioned above, the glass effectively withstands compression, but in view of its fragility is not very resistant to tensile stresses. Therefore, in accordance with this study, the glass is combined with a separate element or with a separate strong structure resistant to tensile stresses, so as to improve partly the distribution of the tensile loads over the whole multilayer structure.

In so doing, the glass is subject to a smaller load than the load which would affect it if no combined solution were to be adopted. In the event of breakage of the glass, the tensile forces which act on the beam are transmitted to the element or to the additional structure, while the glass continues to absorb the compressive forces since it is able to maintain its compressive strength even when damaged.

The tensile stresses, which are absorbed by the element or by the additional structure resistant to tensile stress, are not transmitted to the multilayer glass structure but transmitted directly to the beam support plane.

According to this known art, in particular the following different embodiments are possible:
- multilayer glass beams supported by a system of metal or plastic reticular beams;
- multilayer glass beams having a folded bottom edge and a separate tensile element inserted in the form of a tie.

In these said embodiments the glass elements rest, without adhering, on the additional elements which are resistant to tensile stress and which therefore transmit the corresponding stresses to the support plane.

A common drawback of these known embodiments is the need to provide constraining devices in order to allow the tensile elements to withstand all the tensile forces and the associated bending moments to which they may be subject.

These embodiments are clearly considerably more complex and costly than the simple supports intended to receive only a perpendicular load.

The patent WO0076763 describes the construction of a multilayer glass element with steel cables inserted between the sheets which form the multilayer element and which are arranged equidistant from each other and extend over the whole surface of the said sheets.

This solution is also subject to the drawbacks of the embodiments described above for multilayer glass beams cooperating with an element or with an additional structure which is resistant to tensile stress.

### Disclosure of the invention

A primary object of the present invention is therefore that of eliminating the drawbacks of the known art mentioned above by providing a structural element, in particular for the building industry, with an improved flexural rigidity and safety characteristics.

Another object is that of providing toughened, transparent, structural elements without the addition, between the sheets of glass, of one or more tough and transparent polymer sheets.

Another object is to provide transparent structural elements which are protected against the subcritical propagation of the microscopic cracks, which is caused or favoured by humidity.

A further object is to provide transparent structural elements which are particularly light and able to best exploit the mechanical characteristics of glass.

A particular object of the invention is to provide transparent structural elements with reduced production and assembly costs.

These objects, together with others, are achieved by a structural element, in particular for the building industry, according to claim 1.

As a result of the finding according to the present invention, it is possible to provide structural elements such as glass beams, pillars, spans and ties, having optimum safety characteristics, a limited weight and a low cost.

### Brief description of the drawings

The technical features of the invention, in accordance with the abovementioned objects, may be clearly understood from the contents of the claims indicated below and the advantages thereof will emerge clearly from the detailed description which follows, with reference to the accompanying drawings, which show purely exemplary and non-limiting embodiments in which:
FIG. 1 shows a perspective view of a first example of embodiment of a transparent structural element according to the present invention, subject to a bending stress;
FIG. 2 shows a top plan view of the example of embodiment according to FIG. 1;
FIG. 3 shows a cross-section along a plane, as indicated by the line Z-Z, perpendicular to the plane of inflection of the example of embodiment according to FIG. 1;
FIGS. 4 ad 5 show the detail of some embodiments of the strip-like element;
FIG. 6 shows a perspective view of a second example of embodiment of a transparent structural element according to the present invention, subject to a bending stress;
FIG. 7 shows a top plan view of the example of embodiment according to FIG. 6;
FIG. 8 shows a cross-section along a plane, as indicated by the line V-V, perpendicular to the plane of inflection of the example of embodiment according to FIG. 6;
FIG. 9 shows a perspective view of a third example of embodiment of a transparent structural element according to the present invention, subject to a bending stress.
FIG. 10 shows a top plan view of the example of embodiment according to FIG. 9;
FIG. 11 shows a perspective view of a fourth example of embodiment of a transparent structural element according to the present invention, subject to a compressive/bending stress;
FIG. 12 shows a front view of the example of embodiment according to FIG. 11;
FIG. 13 shows a cross-section along the plane, indicated by the line U-U, of the example of embodiment according to FIG. 11;
FIG. 14 shows the diagram of a horizontal or vertical structural element subject to a bending stress imparted by a uniformly distributed load;
FIG. 15 shows the diagram of a horizontal or vertical structural element according to the present invention, subject to a bending stress imparted by a uniformly distributed load.

### Detailed description of some preferred examples of embodiment

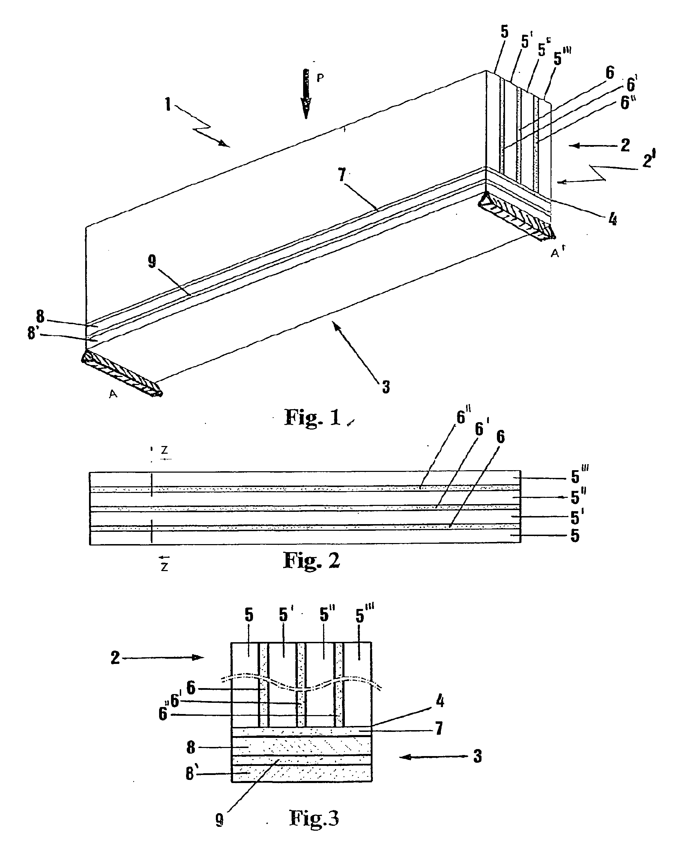

With reference to the accompanying figures 1 and 2, 1 denotes in its entirety a transparent structural element constructed in accordance with the present invention.

As will clarified more fully below, the abovementioned structural element 1 may advantageously consist of a beam, a lintel, an arch or a similar element, in view of the fact that, in these constructional forms, the invention in question offers the greatest advantages in terms of the improved performance with regard to mechanical behaviour.

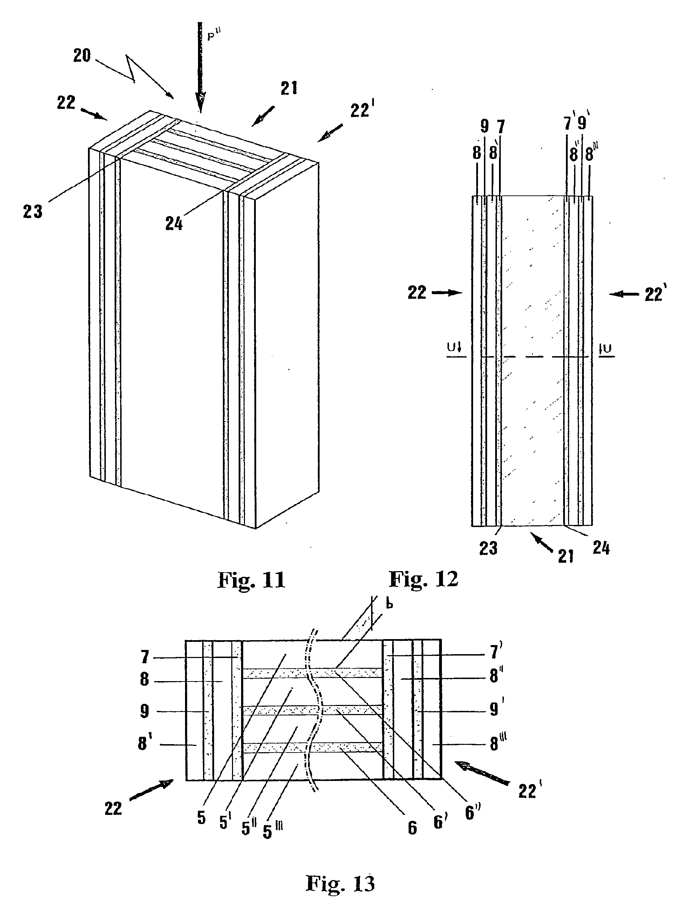

However, without thereby departing from the scope of protection of the present invention, the structural element in question may also assume other constructional forms such as that of a transparent multilayer wall or a column, as explained in particular in the example shown in Figures 11 to 13.

Below, therefore, for the sake of simplicity of the description, we shall consider the structural element 1 generally consisting of a beam.

In accordance with the main feature of the present invention, the beam 1 essentially consists of a sheet-like portion 2 and a strip-like portion 3. The latter is integrally joined to at least one section of the peripheral edge 4 of the sheet-like portion 2.

The beam 1 therefore consists of a composite structure comprising two portions 2 and 3 forming a single body.

In greater detail, the sheet-like portion 2 is in turn formed by means of one or more transparent sheet-like elements 5, 5', 5'', 5''' - made of glass or other transparent material such as polycarbonate - which are arranged adjacent and parallel to each other and between which first layers 6, 6', 6" of transparent adhesive are arranged.

With particular reference to the accompanying Figures 1 to 3, it is envisaged that the abovementioned beam 1 is stressed in the usual manner by a bending stress which is induced by a load P acting parallel to the main plane of lie of the sheet-like portions 2 and perpendicularly with respect to the dimension of their greater extension and which is opposed solely by the supports A and A'.

Consequently, in accordance with the stress distribution diagram, explained in detail below, fixing means 7 are provided along the entire edge 4 of the sheet-like portion 2 in the region of the part 2' of the latter which is subject to tensile stress.

These means advantageously consist of a second layer 7 of adhesive which is made to adhere to the strip-like portion 3.

The latter preferably consists of one or more strips 8 which are superimposed on each other with third layers 9 of adhesive arranged in between.

The thickness of the layers of adhesive is preferably between 0.1 and 2 mm (this latter limit value in particular for the layer of polyvinyl butyral).

Suitably the adhesive is of the transparent type based on polyvinyl butyral.

Advantageously, when heat and/or fire-resistance is required, the intumescent transparent adhesive has a thickness preferably between 0.1 and 3 mm.

The strips 8 may be made of homogeneous metallic material such as aluminium, steel or titanium, or non-metallic material such as carbon fibre or Kevlar, or a composite material.

Advantageously, the composite material is a polymer matrix fibre-reinforced with long or short fibres.

Suitably, the fibres may be of an inorganic nature, such as boron or steel fibres, or of an organic nature, such as carbon fibres or Kevlar, or a combination thereof.

Preferably these fibres are organised in the form of fabrics, matting or fibrous structures of the type known by the technical term "mat" (short fibres mixed in a resin matrix paste).

The strip-like portion 3 may consist of a single layer (composed for example of one or more strips of the abovementioned type) or several layers of different material. Suitably, layers of "tough" material, arranged so as to adhere to the edge 4 of the element 2, and layers of "rigid" material arranged externally, will be present.

The example of embodiment of the strip-like element shown in FIG. 3 consists of a layer 8 of tough material and a layer 8' of rigid material which are joined integrally together by means of the third adhesive layer 9.

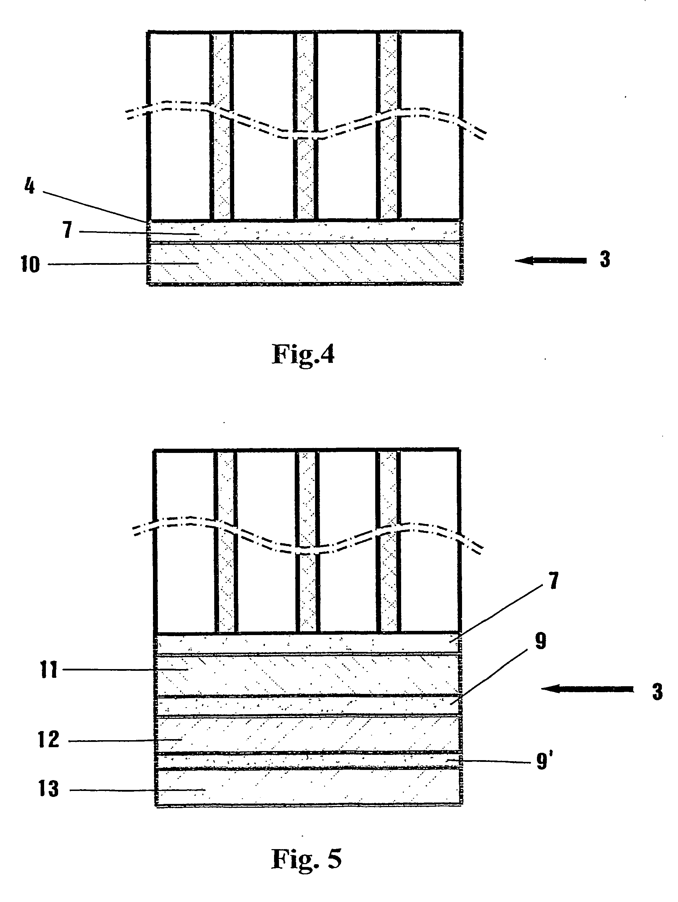

FIG. 4 shows an example of embodiment in which the strip-like element 3 consists of a single strip 10 of tough or rigid material.

According to the example of embodiment shown in FIG. 5, the strip-like element 3 consists of a layer 11 of tough material, a layer 12 of rigid metallic material and a layer 13 of rigid material consisting of fibre-reinforced polymer matrix which are joined integrally together by means of the third layers 9 and 9' of adhesive.

The rigid layers consist of material having a modulus of elasticity greater than that of glass, equal to 70 GPa.

The tough layers consist of material having K_{IC} greater than 0.75 MPa√m.

In all cases, the strip-like portion 3 is integrally fastened to the sheet-like portion 2 of the beam 1 and not to the support plane thereof. In accordance with the example illustrated, the devices A, A' for constraining the beam 1 are simple supports and therefore are unable to oppose stresses having directions different from the perpendicular direction.

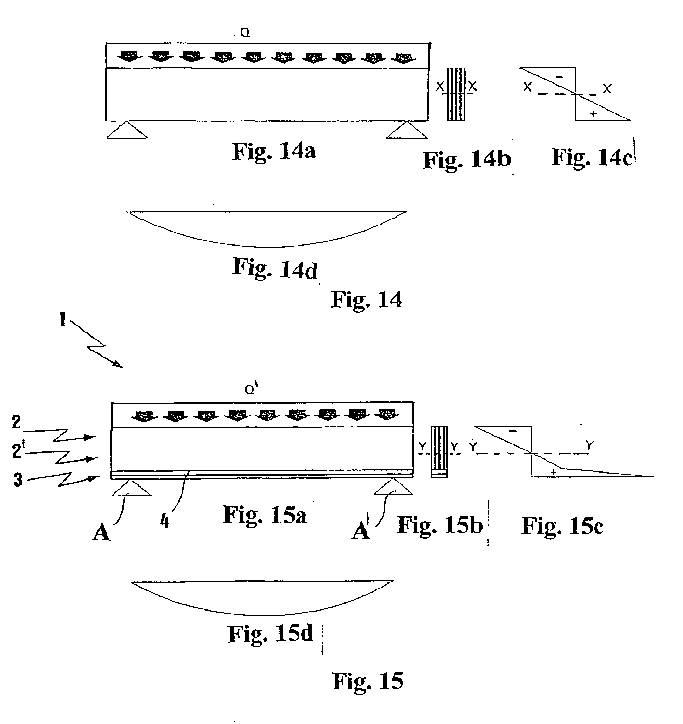

Figures 14 and 15 illustrate the mechanical behavioural characteristics of any beam made of isotropic material and the beam according to the present invention, so that their respective patterns may be easily compared.

In greater detail, FIG. 14 shows in schematic form a beam simply resting under the weight of a uniformly distributed load Q and having the cross-section schematically shown in 14b.

FIG. 14d shows the bending moment diagram and 14c the stress diagram. Being an isotropic material, there is an even distribution of the compressive and tensile stresses separated by the neutral axis indicated by the line X-X.

FIG. 15 shows in schematic form the beam according to the present invention simply resting on the two fastening devices A, A' and subjected to a uniformly distributed load Q'. The cross-section of the beam 1 is schematically shown in Fig. 15b.

FIG. 15d shows the bending moment diagram and FIG. 15c shows the stress diagram in which it can be noted how most of the tensile stress is absorbed by the strip-like portion 3 and the neutral axis indicated by the line Y-Y is clearly displaced towards the edge 4 of the part 2' of the sheet-like portion 2 subject to tensile stress.

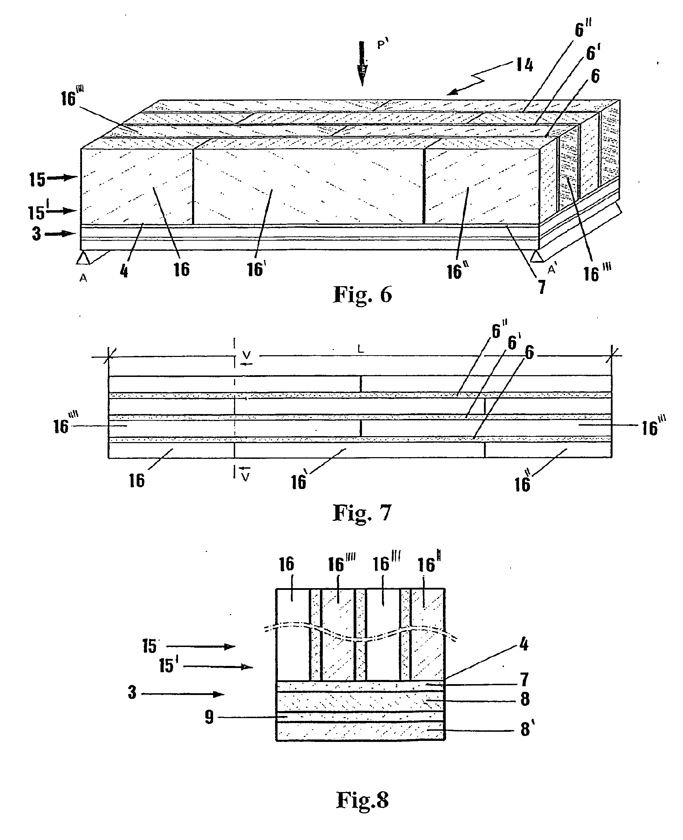

In the accompanying Figures 6 to 8, the reference number 14 indicates overall a second embodiment of a transparent structural element according to the present invention, represented by a beam subject to bending stress and essentially consisting of a sheet-like portion 15 and a strip-like portion 3 integrally joined to at least one edge 4 of the sheet-like portion 15.

The sheet-like portion 15 consists of a plurality of sheet-like elements 16, 16', 16", 16''', 16'''', etc., each having a length less than the span L of the beam and arranged adjacent and parallel to each other, but staggered with respect to each other in a continuous manner in the direction of the beam length. The strip-like portion 3 is integrally joined to the edge 4 of the sheet-like portion 15 in the region of the part 15' of the latter subject to tensile stress, by means of the second layer 7 of adhesive. This latter part 15' is defined by the stress diagram as indicated in the preceding Figure 15c.

The stress is induced by a load P' acting parallel to the main plane of lie of the sheet-like portions 15 and perpendicularly with respect to the dimension of their greater extension and is opposed by the sole supports A and A'.

In this way it is possible to construct beams which are also very long, using sheet-like elements 16 which are much shorter than the span L of the beam, assembled in a staggered manner.

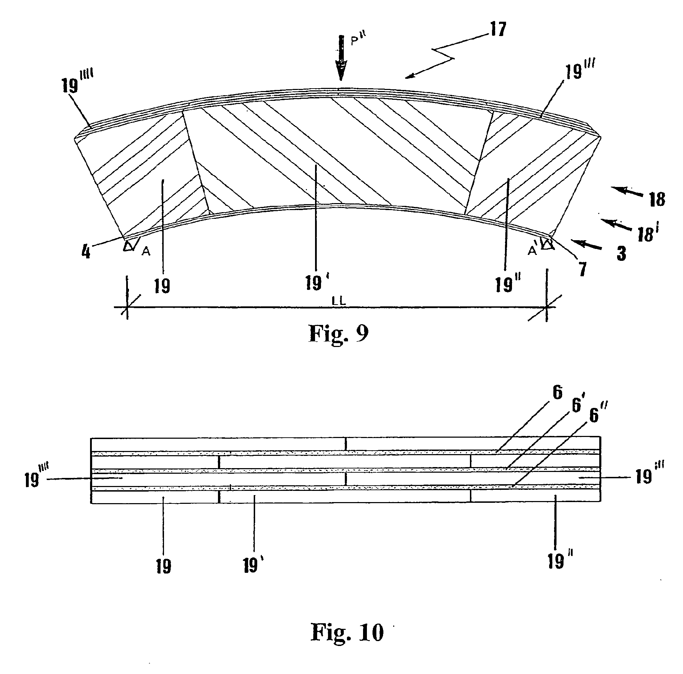

In the accompanying Figures 9 and 10, the reference number 17 indicates in its entirety a third embodiment of a transparent structural element according to the present invention, also subject to bending stress. It has an arched shape and essentially consists of a sheet-like portion 18 and a strip-like portion 3 integrally joined to the edge 4 of the portion 18 subject to a tensile stress.

The sheet-like portion 18 consists of a plurality of sheet-like element elements 19, 19', 19", 19"', 19"" ...., having an arched bottom edge and each having a length less than the span LL of the arch, being arranged adjacent and parallel to each other, but staggered with respect to each other in a continuous manner in the direction of the curved abscissa of the arch. The strip-like portion 3 is integrally joined to the edge 4 of the sheet-like portion 18 in the region of the part 18' of the latter subject to a tensile stress, by means of the second layer 7 of adhesive.

In a similar manner to the preceding cases, the stress is induced by a load P'' acting parallel to the main plane of lie of the sheet-like portions and substantially perpendicularly with respect to the dimension of their greater extension and is opposed by the sole supports A and A'.

In accordance with the examples of embodiment described hitherto, it can be noted that, functionally speaking, following the appearance of cracks inside one or more sheets of glass which form the sheet-like multilayer portion 2, 15, 18, in particular as a result of the tensile stress exerted in the part 2', 15', 18', the corresponding strip-like portion 3 ensures a substantial redistribution of the stresses over the said sheet-like portion and partial transmission of the tensile stress to the said strip-like portion.

As a result of this, even after the appearance of sizeable fractures in the glass, the beam may be subject to an increasing tensile load before reaching the point of collapse and definitive breakage.

The increase in the safety of the beam according to the invention compared to the multilayer glass beams known hitherto, which collapsed rapidly as explained above following the appearance of the first cracks, is entirely evident.

In the accompanying Figures 11 and 12, the reference number 20 indicates overall a fourth embodiment of a transparent structural element according to the present invention, relating to a pillar which is subject to a compressive/bending stress and essentially consists of a sheet-like portion 21 and two strip-like portions 22 and 22' which are integrally joined to the edges 23 and 24 of the portion 21, parallel to the direction of the load.

The strip-like portion 21 is composed of one or more transparent sheet-like elements which are made of glass or other transparent material such as polycarbonate and which are arranged adjacent and parallel to each other and between which first layers of transparent adhesive are arranged.

The compressive/bending stress is induced by a load P" acting parallel to the main plane of lie of the sheet-like portions and parallel to the dimension of their greater extension.

Although the structural element according to the present invention has been designed in particular as a beam for achieving the mechanical performance characteristics described above, it is suitable also for assuming other configurations such as the column-like configuration illustrated above, albeit distinguished by particular advantageous mechanical characteristics.

In greater detail, without the strip-like portions 22 and 22', the overall moment of inertia of the column in the bending plane is obtained by adding together the respective values of the individual sheet-like portions 21 forming the said column, each calculated as bh³/12 where b indicates the thickness and h the height of the sheet-like portion 21. With the presence of the strip-like portions 22, 22', however, the moment of inertia of the column in the bending plane is obtained, without taking into account the rigidifying effect of the said strip-like portions 22 and 22', from bD³/12 where D is the sum of the thicknesses b of the individual sheets. This results, in the presence of the strip-like portions 22, 22' rigidly connected to the sheet-like portion 21, to an obvious greater flexural rigidity of the entire column 20, defined as the product of the value of the moment of inertia multiplied by the value of the elastic modulus.

### Example 1

Transparent structural element subject to a bending stress, consisting of glass sheets parallel to each other, 4300 mm long, 600 mm wide, 15 mm thick. A layer of polyvinyl butyral, 0.76 mm thick, is arranged between each pair of adjacent sheets. The stress is induced by a load acting parallel to the greater plane of the sheet-like elements. Along the entire edge subject to tensile stress, a layer of aluminium, 10 mm thick, 62 mm wide, 4300 mm long is glued by means of a layer of epoxy adhesive such as araldite (Ciba).

### Example 2

Transparent structural element subject to a bending stress, consisting of glass sheets parallel to each other, 4300 mm long, 600 mm wide, 15 mm thick. A layer of polyvinyl butyral, 0.76 mm thick, is arranged between each pair of adjacent sheets. The stress is induced by a load acting parallel to the greater plane of the sheet-like elements. Along the entire edge subject to tensile stress, a strip-like element, consisting of a layer of aluminium, 5 mm thick, 62 mm wide, 4300 mm long and a layer 5 mm thick, 62 mm wide and 4300 mm long made of resin fibre-reinforced with long unidirectional carbon fibres having an elastic modulus greater than 300 GPa, is glued by means of a layer of epoxy adhesive such as araldite (Ciba). The volumetric fraction of the fibres is equal to 50 per cent.

### Example 3

Composite structural element, subject to a bending stress, consisting of four series of glass sheets arranged parallel to each other, 4400 mm long, 600 mm wide. The first series of sheets consists, along the abscissa of the beam, of a first sheet, 1100 mm long, 600 mm wide, 15 mm thick, a second sheet 2200 mm long, 600 mm wide, 15 mm thick, a third sheet 1100 mm long, 600 mm wide, 15 mm thick; the second series of sheets consists, along the abscissa of the beam, of a first and a second sheet, 2200 mm long; the third series of sheets consists, along the abscissa of the beam, of the same elements as the first series of sheets and the fourth series of sheets consists of the same elements as the second series of sheets. A layer of polyvinyl butyral, 0.76 mm thick, is arranged between each adjacent series of sheets. A strip-like element, formed as in Example 2, is glued to the entire edge subject to tensile stress.

### Example 4

A composite transparent structural element having an arched shape with a span of 3000 mm, subject to a bending stress, consisting of four series of glass sheets parallel to each other and formed by a plurality of sheet-like elements having an arched bottom edge, each sheet having a length less than the span of the arch, arranged adjacent and parallel to each other, but staggered with respect to each other in a continuous manner in the direction of the curved abscissa of the arch. The first series of sheets consists, along the curved abscissa of the arch, of a first sheet 700 mm long, 600 mm wide, 15 mm thick, a second sheet 1600 mm long, 600 mm wide, 15 mm thick, and a third sheet 700 mm long, 600 mm wide, 15 mm thick; the second series of sheets consists, along the curved abscissa of the arch, of a first and a second sheet 1500 mm long, the third series of sheets consists, along the curved abscissa of the arch, of the same elements as the first series of sheets and the fourth series of sheets consists of the same elements as the second series of sheets. A layer of polyvinyl butyral, 0.76 mm thick, is arranged between each series of adjacent sheets. A strip-like element, formed as in Example 2, is glued along the entire edge subject to tensile stress, by means of a layer of epoxy resin such as araldite (Ciba).

In accordance with the present invention, the strip-like portion 3 is formed by bands having a width corresponding to the width of the individual sheet onto which they are joined so as to adhere.

This allows easier production of the multilayer sheets by means of separate finishing of each individual sheet before being joined to the other sheets for formation of the multilayer element.

Moreover, this solution does not reduce the bond between the individual sheets 5, 6 since preferably the strip-like portion 3 is formed by highly directed fibres able to withstand the tensile stresses solely in the direction of extension of the edge of the said sheets and not in the direction perpendicular to their thickness.

As a result of affixing of the strip-like portion according to the present invention, it is possible to protect the cut and non-ground edge of the sheet-like glass portions from the action of humidity and therefore prevent or at least hinder the propagation of cracks induced by the cutting and/or grinding operation.

The transparency of the structural element is not substantially modified compared to similar transparent structural elements at present commercially available, since the strip-like portion of the element according to the invention is arranged along the ordinarily ground and therefore per se less transparent edge of the structural elements of the known type.

Moreover, the provision of a strip-like portion fixed to a sheet-like portion according to the present invention allows the structural elements subject to tensile stress to be positioned on simple supports.

The formation of the supports on the support plane is considerably simplified, it not being necessary to provide constraining systems of the fitted joint type able to oppose both the tensile stresses and the bending moments.

As a result of the finding of the present invention, the flexural rigidity of the structural element may be increased as a whole. In particular in the case of elements which are subject to a compressive/bending stress, the critical load acting on the structure itself may be increased.

Advantageously, in the case where heat or fire-resistant structural elements are required, the adhesive layer between the strip-like elements may consist of a material having intumescent properties.

The presence of a tough layer in the strip-like portion toughens the overall structural element and renders superfluous, without affecting the safety, the presence of a sheet of tough material such as polycarbonate unnecessary in the sheet-like portion, with a consequent constructional simplification and reduction in costs.

The provision of the strip-like portion with a tough and/or rigid layer integral with the part of the sheet-like portion subject to tensile stress, since it absorbs most of the tensile stresses which are responsible for the subcritical propagation of the microscopic cracks, allows a more precise design of the structural element and therefore, without affecting the safety, allows the adoption of a decidedly lower safety coefficient.

Moreover, as a result of the improved design and the lower safety coefficient, which allows more rational use of the material, structures which are more manageable, light and less costly may be produced.

A further advantage consists in being able to apply the finding according to the present invention also to ready existing structures.

## Claims

1. Structural element, in particular for the building industry, comprising at least one sheet-like portion (2, 15, 18) of transparent material provided with two flat surfaces and a peripheral edge (4), said sheet-like portion (2,15,18) being a multilayer structure composed of several transparent sheet-like elements (5, 5', 5'', 16, 16', 16'', 19, 19', 19'') which are joined to each other, said structural element also comprising at least one strip-like portion (3) integrally adhering to at least one section of the peripheral edge (4) of said sheet-like portion (2, 15, 18) subject to tensile stress by means of fixing means (7), in particular consisting of a layer of adhesive, so as to increase the flexural rigidity and/or the toughness of the sheet-like portion (2, 15, 18) itself, **characterized in that** said strip-like portion (3) has a width corresponding to the thickness of said multilayer structure and comprises at least one element made of material having a critical stress intensification factor K_{Ic} greater than 0.75 MPa√m.

2. Structural element according to Claim 1, **characterized in that** a first layer of transparent adhesive (6, 6', 6'') is arranged between said sheet-like elements (5, 5', 5'', 16, 16', 16'', 19, 19', 19").

3. Structural element according to Claim 1, **characterized in that** said multilayer element consists of single-piece plate-like elements (5, 5', 5") which are parallel to each other.

4. Structural element according to Claim 1, **characterized in that** said multilayer element consists of sheet-like elements (19, 19', 19") which are glued together in a staggered manner using a first layer of transparent adhesive (6, 6', 6'').

5. Structural element according to Claim 1, **characterized in that** said strip-like portion (3) is composed of one or more layers (8,8') which are joined together integrally by means of third layers of adhesive (9, 9').

6. Structural element according to Claim 1, **characterized in that** said transparent material is glass and/or transparent polymer.

7. Structural element according to Claim 6, **characterized in that** said transparent polymer is polycarbonate, polyurethane, polyvinyl chloride or mixtures thereof or their copolymers.

8. Structural element according to Claims 2 or 4, **characterized in that** said transparent adhesive is polyvinyl butyral, polyurethane or combinations or copolymers thereof.

9. Structural element according to Claims 2 or 4, **characterized in that** said transparent adhesive is an intumescent material.

10. Structural element according to Claim 1, **characterized in that** said strip-like portion (3) comprises at least one element made of material having an elastic modulus greater than 70,000 MPa.

11. Structural, element according to Claim 10, **characterized in that** said element having an elastic modulus greater than 70,000 MPa is steel, titanium, a composite with fibre-reinforced polymer matrix or combinations or alloys thereof.

12. Structural element according to Claim 1, **characterized in that** said material having K_{Ic} greater than 0.75 MPa√m is aluminium or polymer.

13. Structural element according to Claim 5, **characterized in that** at least one of said layers (8, 8') of said strip-like portion (3) is composed of long fibres or short fibres or mixtures thereof.

14. Structural element according to Claim 13, **characterized in that** said fibres are organised in the form of fabrics, matting, hanks or combinations thereof.

15. Structural element according to Claim 13, **characterized in that** said fibres consist of organic material or inorganic material or a combination thereof.

16. Structural element according to Claim 15, **characterized in that** said fibres of organic material are fibres of carbon, Kevlar or combinations thereof.

17. Structural element according to Claim 15, **characterized in that** said fibres of inorganic material or fibres of boron, steel or combinations thereof.

18. structural element according to Claim 1, **characterized in that** said strip-like portion (3) is composed of separate bands, each intended to adhere to the edge of a single sheet-like element which forms the multilayer portion by means of first fixing means (7), in particular formed by a second layer of adhesive.

19. Structural element for building structures according to claim 1 in the form of a beam.

20. Structural element for building structures, according to Claim 19, **characterized in that** said sheet-like portion (2, 15, 18) is a multilayer element composed of several transparent sheet-like elements (5, 5', 5'', 16, 16', 16", 19, 19', 19") which are joined together by means of first layers of transparent adhesive (6, 6', 6'').

21. Structural element for building structures, according to Claim 20, **characterized in that** said multilayer element is formed by sheet-like elements (19, 19', 19") which are glued together in a staggered manner by means of said first layers of transparent adhesive (6, 6', 6").

22. Structural element for building structures, according to Claim 19, **characterized in that** said fixing means (7) consist of a second layer of adhesive, in particular consisting of transparent material.

23. Structural element for building structures, according to Claim 19, **characterized in that** said strip-like portion (3) is composed of one or more layers joined together by means of third layers of adhesive (9, 9'), at least one of said layers being composed of fibres organised in the form of fabrics, organic material such as fibres of carbon, Kevlar or the like and/or fibres of inorganic material such as fibres of boron, steel or combinations thereof.

## Patentansprüche

1. Ein Konstruktionselement, insbesondere für die Bauindustrie, aufweisend mindestens einen plattenartigen Teil (2, 15, 18) aus transparentem Material, versehen mit zwei flachen Oberflächen und einer umlaufenden Kante (4), wobei der plattenartige Teil (2, 15, 18) eine Mehrschichtenstruktur ist, die aus mehreren transparenten, plattenartigen Elementen (5, 5', 5", 16, 16', 16", 19, 19', 19"), die aneinandergefügt sind, zusammengesetzt ist, wobei das Konstruktionselement auch mindestens einen streifenartigen Teil (3) aufweist, der fest an mindestens einem Abschnitt der umlaufenden Kante (4) des Zugspannung ausgesetzten, plattenartigen Teils (2, 15, 18) mittels einer Befestigungseinrichtung (7) angebracht ist, insbesondere bestehend aus einer Klebemittelschicht, um die Biegesteifigkeit und/oder Zähigkeit des plattenartigen Teils (2, 15, 18) selbst zu erhöhen, **dadurch gekennzeichnet, dass** der streifenartige Teil (3) eine Breite entsprechend der Dicke der Mehrschichtenstruktur hat und mindestens ein Element aus einem Material aufweist, das einen kritischen Spannungserhöhungsfaktor KIC von mehr als 0,75 MPa√m besitzt.

2. Konstruktionselement gemäß Anspruch 1, **dadurch gekennzeichnet, dass** eine erste Schicht eines transparenten Klebemittels (6, 6', 6") zwischen den plattenartigen Elementen (5, 5', 5", 16, 16', 16", 19, 19', 19") angeordnet ist.

3. Konstruktionselement gemäß Anspruch 1, **dadurch gekennzeichnet, dass** das Mehrschichtenelement aus einstückigen, plattenartigen Elementen (5, 5', 5") besteht, die zueinander parallel sind.

4. Konstruktionselement gemäß Anspruch 1, **dadurch gekennzeichnet, dass** das Mehrschichtenelement aus plattenartigen Elementen (19, 19', 19") besteht, die mittels einer ersten Schicht eines transparenten Klebemittels (6, 6', 6") versetzt zusammengeklebt sind.

5. Konstruktionselement gemäß Anspruch 1, **dadurch gekennzeichnet, dass** der streifenartige Teil (3) aus einer oder mehr Schichten (8, 8') zusammengesetzt ist, die mittels dritter Klebemittelschichten (9, 9') fest zusammengefügt sind.

6. Konstruktionselement gemäß Anspruch 1, **dadurch gekennzeichnet, dass** das transparente Material Glas und/oder transparentes Polymer ist.

7. Konstruktionselement gemäß Anspruch 6, **dadurch gekennzeichnet, dass** das transparente Polymer Polykarbonat, Polyurethan, Polyvinylchlorid oder Mischungen daraus oder ihre Copolymere ist.

8. Konstruktionselement gemäß Anspruch 2 oder 4, **dadurch gekennzeichnet, dass** das transparente Klebemittel Polyvinylbutyral, Polyurethan oder Kombinationen oder Copolymere davon ist.

9. Konstruktionselement gemäß Anspruch 2 oder 4, **dadurch gekennzeichnet, dass** das transparente Klebemittel ein quellendes Material ist.

10. Konstruktionselement gemäß Anspruch 1, **dadurch gekennzeichnet, dass** der streifenartige Teil (3) mindestens ein Element aufweist, das aus einem Material mit einem Elastizitätsmodul von mehr als 70.000 MPa hergestellt ist.

11. Konstruktionselement gemäß Anspruch 10, **dadurch gekennzeichnet, dass** das Element mit einem Elastizitätsmodul von mehr als 70.000 MPa Stahl, Titan, ein Verbundwerkstoff mit faserverstärkter Polymermatrix oder Kombinationen oder Legierungen daraus ist.

12. Konstruktionselement gemäß Anspruch 1, **dadurch gekennzeichnet, dass** das Material mit einem KIC von mehr als 0,75 MPa√m Aluminium oder ein Polymer ist.

13. Konstruktionselement gemäß Anspruch 5, **dadurch gekennzeichnet, dass** mindestens eine der Schichten (8, 8') des streifenartigen Teils (3) aus langen Fasern oder kurzen Fasern oder Mischungen daraus zusammengesetzt ist.

14. Konstruktionselement gemäß Anspruch 13, **dadurch gekennzeichnet, dass** die Fasern in Form von Geweben, Matten, Strähnen oder Kombinationen daraus aufgebaut sind.

15. Konstruktionselement gemäß Anspruch 13, **dadurch gekennzeichnet, dass** die Fasern aus organischem Material oder anorganischem Material oder einer Kombination daraus bestehen.

16. Konstruktionselement gemäß Anspruch 15, **dadurch gekennzeichnet, dass** die Fasern aus organischem Material Fasern aus Kohlenstoff, Kevlar oder Kombinationen daraus sind.

17. Konstruktionselement gemäß Anspruch 15, **dadurch gekennzeichnet, dass** die Fasern aus anorganischem Material Fasern aus Bor, Stahl oder Kombinationen daraus sind.

18. Konstruktionselement gemäß Anspruch 1, **dadurch gekennzeichnet, dass** der streifenartige Teil (3) aus separaten Bändern zusammengesetzt ist, von denen jedes an der Kante eines einzelnen plattenartigen Elements, das den Mehrschichtenteil bildet, mittels einer ersten Befestigungseinrichtung (7), die insbesondere durch eine zweite Klebemittelschicht gebildet wird, befestigt sein soll.

19. Konstruktionselement für Bauwerke gemäß Anspruch 1 in der Form eines Balkens.

20. Konstruktionselement für Bauwerke gemäß Anspruch 19, **dadurch gekennzeichnet, dass** der plattenartige Teil (2, 15, 18) ein Mehrschichtenelement ist, das aus mehreren transparenten, plattenartigen Elementen (5, 5', 5", 16, 16', 16", 19, 19', 19") zusammengesetzt ist, die mittels erster Schichten eines transparenten Klebemittels (6, 6', 6") zusammengefügt sind.

21. Konstruktionselement für Bauwerke gemäß Anspruch 20, **dadurch gekennzeichnet, dass** das Mehrschichtenelement durch plattenartige Elemente (19, 19', 19") gebildet wird, die mittels der ersten Schichten eines transparenten Klebemittels (6, 6', 6") versetzt zusammengeklebt sind.

22. Konstruktionselement für Bauwerke gemäß Anspruch 19, **dadurch gekennzeichnet, dass** die Befestigungseinrichtung (7) aus einer zweiten Klebemittelschicht besteht, die insbesondere aus transparentem Material besteht.

23. Konstruktionselement für Bauwerke gemäß Anspruch 19, **dadurch gekennzeichnet, dass** der streifenartige Teil (3) aus einer oder mehr Schichten zusammengesetzt ist, die mittels dritter Klebemittelschichten (9, 9') aneinandergefügt sind, wobei mindestens eine der Schichten aus Fasern zusammengesetzt ist, die in Form von Geweben, organischem Material wie Fasern aus Kohlenstoff, Kevlar oder dergleichen und/oder Fasern aus anorganischem Material wie Fasern aus Bor, Stahl oder Kombinationen daraus aufgebaut sind.

## Revendications

1. ÉLÉMENT STRUCTUREL, en particulier pour l'industrie du bâtiment, comportant au moins une portion ressemblant à une feuille (2, 15, 18) de matériau transparent munie de deux surfaces planes et d'un bord périphérique (4), la portion ressemblant à une feuille (2, 15, 18) susdite étant une structure multicouche constituée de plusieurs éléments ressemblant à une feuille transparents (5, 5', 5" , 16, 16', 16'', 19, 19', 19'') qui sont joints les uns aux autres, l'élément structurel susdit comportant aussi au moins une portion ressemblant à une bande (3) adhérant intégralement à au moins une section du bord périphérique (4) de la portion ressemblant à une feuille (2, 15, 18) susdite soumise à une contrainte de traction par le biais d'un moyen de fixation (7), constitué en particulier d'une couche d'adhésif, de façon à augmenter la rigidité en flexion et/ou la ténacité de la portion ressemblant à une feuille (2, 15, 18) elle-même, **caractérisé en ce que** la portion ressemblant à une feuille (3) susdite a une largeur correspondant à l'épaisseur de la structure multicouche susdite, et qu'elle comporte au moins un élément fait d'un matériau ayant un facteur d'intensification de la contrainte critique Krc supérieur à 0,75 MPa√m.

2. ÉLÉMENT STRUCTUREL selon la revendication 1, **caractérisé en ce qu'**une première couche d'adhésif transparent (6, 6', 6") est aménagée entre les éléments ressemblant à une feuille (5, 5', 5", 16, 16', 16", 19, 19', 19") susdits.

3. ÉLÉMENT STRUCTUREL selon la revendication 1, **caractérisé en ce que** l'élément multicouche susdit est constitué d'éléments ressemblant à une plaque mono-pièce (5, 5', 5") qui sont parallèles les uns par rapport aux autres.

4. ÉLÉMENT STRUCTUREL selon la revendication 1, **caractérisé en ce que** l'élément multicouche susdit est constitué d'éléments ressemblant à une feuille (19, 19', 19") qui sont collés ensemble d'une manière décalée en utilisant une première couche d' adhésif transparent (6, 6', 6").

5. ÉLÉMENT STRUCTUREL selon la revendication 1, **caractérisé en ce que** la portion ressemblant à une bande (3) susdite est constituée d'une ou plusieurs couches (8, 8') qui sont jointes ensembles intégralement moyennant des troisièmes couches d'adhésif (9, 9').

6. ÉLÉMENT STRUCTUREL selon la revendication 1, **caractérisé en ce que** le matériau transparent susdit est du verre et/ou du polymère transparent.

7. ÉLÉMENT STRUCTUREL selon la revendication 6, **caractérisé en ce que** le polymère transparent susdit est du polycarbonate, du polyuréthane, du chlorure de polyvinyle ou des mélanges de ceux-ci ou de leurs copolymères.

8. ÉLÉMENT STRUCTUREL selon la revendication 2 ou 4, **caractérisé en ce que** l'adhésif transparent susdit est du butyral de polyvinyle, du polyuréthane ou des combinaisons ou copolymères de ceux-ci.

9. ÉLÉMENT STRUCTUREL selon la revendication 2 ou 4, **caractérisé en ce que** l'adhésif transparent susdit est un matériau intumescent.

10. ÉLÉMENT STRUCTUREL selon la revendication 1, **caractérisé en ce que** la portion ressemblant à une bande (3) susdite comporte au moins un élément fait d'un matériau ayant un module élastique de plus de 70.000 MPa.

11. ÉLÉMENT STRUCTUREL selon la revendication 10, **caractérisé en ce que** l'élément susdit ayant un module élastique de plus de 70.000 MPa est de l'acier, du titane, un composite à matrice polymère renforcé avec des fibres ou des combinaisons d'alliages de ceux-ci.

12. ÉLÉMENT STRUCTUREL selon la revendication 1, **caractérisé en ce que** le matériau susdit ayant un Krc supérieur à 0,75 MPa√m est de l'aluminium ou un polymère.

13. ÉLÉMENT STRUCTUREL selon la revendication 5, **caractérisé en ce qu'**au moins l'une des couches (8, 8') susdites de la portion ressemblant à une bande (3) susdite est constituée de fibres longues ou de fibres courtes ou de mélanges de celles-ci.

14. ÉLÉMENT STRUCTUREL selon la revendication 13, **caractérisé en ce que** les fibres susdites sont organisées sous forme de tissus, nappes, écheveaux ou de combinaisons de ceux-ci.

15. ÉLÉMENT STRUCTUREL selon la revendication 13, **caractérisé en ce que** les fibres susdites sont constituées d'un matériau organique ou d'un matériau inorganique ou d'une combinaison de ceux-ci.

16. ÉLÉMENT STRUCTUREL selon la revendication 15, **caractérisé en ce que** les fibres de matériau organique susdites sont des fibres de carbone, du Kevlar ou une combinaison de ceux-ci.

17. ÉLÉMENT STRUCTUREL selon la revendication 15, **caractérisé en ce que** les fibres de matériau inorganique susdites sont des fibres de bore, d'acier ou des combinaisons de ceux-ci.

18. ÉLÉMENT STRUCTUREL selon la revendication 1, **caractérisé en ce que** la portion ressemblant à une bande (3) susdite est constituée de bandes séparées, chacune ayant le but d'adhérer au bord d'un élément ressemblant à une feuille individuel qui forme la portion multicouche par le biais d'un premier moyen de fixation (7), formé en particulier par une seconde couche d'adhésif.

19. ÉLÉMENT STRUCTUREL pour structures de bâtiment selon la revendication 1 ayant la forme d'une poutre.

20. ÉLÉMENT STRUCTUREL pour structures de bâtiment selon la revendication 19, **caractérisé en ce que** la portion ressemblant à une feuille (2, 15, 18) susdite est un élément multicouche constitué de plusieurs éléments ressemblant à une feuille transparents (5, 5', 5", 16, 16', 16" , 19, 19', 19") qui sont joints ensemble moyennant de premières couches d'adhésif transparent (6, 6', 6").

21. ÉLÉMENT STRUCTUREL pour structures de bâtiment selon la revendication 20, **caractérisé en ce que** l'élément multicouche susdit est formé par des éléments ressemblant à une feuille (19, 19', 19") qui sont collés ensemble d'une manière décalée moyennant les premières couches d'adhésif transparent (6, 6', 6") susdites.

22. ÉLÉMENT STRUCTUREL pour structures de bâtiment selon la revendication 19, **caractérisé en ce que** le moyen de fixation (7) susdit est constitué d'une seconde couche d'adhésif, constitué en particulier d'un matériau transparent.

23. ÉLÉMENT STRUCTUREL pour structures de bâtiment selon la revendication 19, **caractérisé en ce que** la portion ressemblant à une bande (3) susdite est constituée d'une ou plusieurs couches jointes ensemble moyennant de troisièmes couches d'adhésif (9, 9'), au moins l'une des couches susdites étant constituée de fibres organisées sous forme de tissus, matériau organique tel que fibres de carbone, Kevlar ou similaires et/ou de fibres de matériau inorganique tel que fibres de bore, acier ou des combinaisons de ceux-ci.
